# EUROPÄISCHE PATENTSCHRIFT

(11) **EP 1 514 771 B1**
(45) Veröffentlichungstag und Bekanntmachung des Hinweises auf die Patenterteilung: **22.08.2007**
(21) Anmeldenummer: 04017187.8
(22) Anmeldetag: 21.07.2004
(51) Int. Cl.: B62D 27/06, B60Q 1/04, B60Q 1/26

(54) **Befestigungsvorrichtung für ein in einer Mulde eines Karosserieteiles aufgenommenes Bauteil**
Fastening device for a component within a recess of a body part
Dispositif de fixation d'un élément dans un orifice dans la pièce de carosserie

(30) Priorität: 12.09.2003 DE 10342168
(43) Veröffentlichungstag der Anmeldung: 16.03.2005
(73) Patentinhaber: Dr.Ing. h.c. F. Porsche Aktiengesellschaft, 70435 Stuttgart (DE)
(72) Erfinder: Rijsbergen, Markus, 71229 Leonberg (DE); Sander, Holger, 71272 Renningen (DE); Danev, Dimitar, 71272 Renningen (DE)

(56) Entgegenhaltungen:
- EP-A- 0 422 405
- EP-A- 1 024 075
- DE-A- 3 402 274
- DE-C- 3 439 234

## Beschreibung

Die Erfindung bezieht sich auf eine Befestigungsvorrichtung für ein in einer Mulde eines Karosserieteiles aufgenommenes Bauteil gem. dem Oberbegriff des Patentanspruchs 1.

Aus der DE 30 44 313 C2 ist eine Befestigungsvorrichtung etwa dieser Art bekannt, bei der Rast-, Stütz- und Halteteile an dem Bauteil vorgesehen sind. An einem seitlichen Randbereich des Bauteils ist ein das Halteteil bildender Schwenkzapfen angeformt, der in eine durch eine elastische Tülle ausgekleidete Öffnung des angrenzenden Seitenwandabschnitts der Mulde eingesteckt ist.

Die Befestigungsvorrichtung umfasst ferner ein separat gefertigtes am Bauteil befestigtes V-förmiges Rastteil, wobei ein Rasthaken des Rastteiles mit einer am Seitenwandabschnitt der Mulde ausgebildeten Öffnung verrastend zusammenwirkt. Außerdem ist an der Rückseite des Bauteils ein S-förmiges aus Federstahl bestehendes Stützteil vorgesehen, das sich mit seinem freien Ende an der Hinterseite der Mulde unter Vorspannung abstützt.

Dieser Anordnung haftet der Nachteil an, dass die Befestigungsvorrichtung aus einer Vielzahl von Teilen gebildet wird, die am Bauteil befestigt werden müssen. Ferner ist das Einstecken des Steckzapfens in die Tülle bzw. Öffnung des Seitenwandabschnitts schwierig, da die Öffnung beim Heranführen des Bauteils durch dieses verdeckt wird.

Da bei dieser Anordnung durch äußeren Druck auf das Bauteil eine Demontage des Bauteils von außen her möglich ist, kann es zudem vorkommen, dass sich die Verrastung löst und das Bauteil ungewollt aus der Mulde herausfällt.

Aufgabe der Erfindung ist es, eine Befestigungsvorrichtung der eingangs genannten Art derart weiterzubilden, dass der Aufbau der Befestigungsvorrichtung vereinfacht wird und dass eine schnelle und einfache Montage und Demontage ohne Einstellarbeiten gewährleistet ist.

Erfindungsgemäß wird diese Aufgabe durch die Merkmale des Anspruchs 1 gelöst. Weitere die Erfindung in vorteilhafter Weise ausgestaltende Merkmale enthalten die Unteransprüche.

Die mit der Erfindung hauptsächlich erzielten Vorteile sind darin zu sehen, dass durch die zwischen der Mulde und dem angrenzenden Bauteil in einem oberen und unteren Bereich zwischengeschalteten Einrichtungen einerseits ein lagerichtiges Einführen des aufzunehmenden Bauteils und andererseits ein Verschwenken des Bauteils um eine aufrechte Schwenkachse erzielt wird, wodurch eine beträchtliche Montagezeitersparnis auftritt. Sämtliche Teile der Befestigungsvorrichtung sind in das Karosserieteil bzw. das aufzunehmende Bauteil integriert, wodurch auf zusätzliche Befestigungselemente und -teile (Halterahmen etc.) verzichtet werden kann. Es brauchen nur die beiden angrenzenden Bauteile zueinander abgestimmt werden. Dadurch ist eine einfache Montage und Demontage ohne Zusatzwerkzeuge gewährleistet. Die Demontage kann mittels einer Kreditkarte oder ähnlichem erfolgen, die in den Spalt zwischen Bauteil und Mulde im Bereich des Rastteils einführbar ist.

Bei der Demontage ist eine Verliersicherung vorgesehen, der durch die zweistufige Ausbildung des Rasthakens gebildet wird. So springt das Bauteil automatisch vor und muss nicht aus der Mulde gezogen werden, bleibt jedoch gesichert. Durch Krafteinwirkung von außen, z.B. bei einem Pendelschlag, bleibt das Bauteil in seiner Betriebsstellung bzw. kehrt in diese zurück.

Die Entnahme des Bauteils aus der Mulde ist nur durch zweimaliges Einstecken einer Kreditkarte oder ähnlichem möglich.

Der bogenförmige hintere Wandabschnitt, die beiden seitlich daran anschließenden Durchtrittsöffnungen und das korrespondierend ausgebildete Gehäuse des aufzunehmenden Bauteils unterstützen das lagerichtige Einführen des Bauteils in die Mulde des Karosserieteils in Querrichtung.

Ein Ausführungsbeispiel der Erfindung wird im Folgenden näher erläutert.
Es zeigen
- Fig. 1: eine perspektivische Ansicht von schräg vorne auf einen vorderen Endbereich eines Personenkraftwagens mit einem Karosserieteil, das eine Mulde zur Aufnahme eines Bauteils aufweist,
- Fig. 2: in Explosionsdarstellung einen Teilbereich des Karosserieteils mit der Mulde und das in die Mulde einsetzbare Bauteil,
- Fig. 3: eine perspektivische Ansicht von schräg vorne auf das Karosserieteil mit der Mulde, wobei das Bauteil eine Einführstellung einnimmt,
- Fig. 4: eine Ansicht von hinten auf das Karosserieteil mit der Mulde und dem eingesetzten Bauteil, wobei das Bauteil seine Betriebsstellung einnimmt,

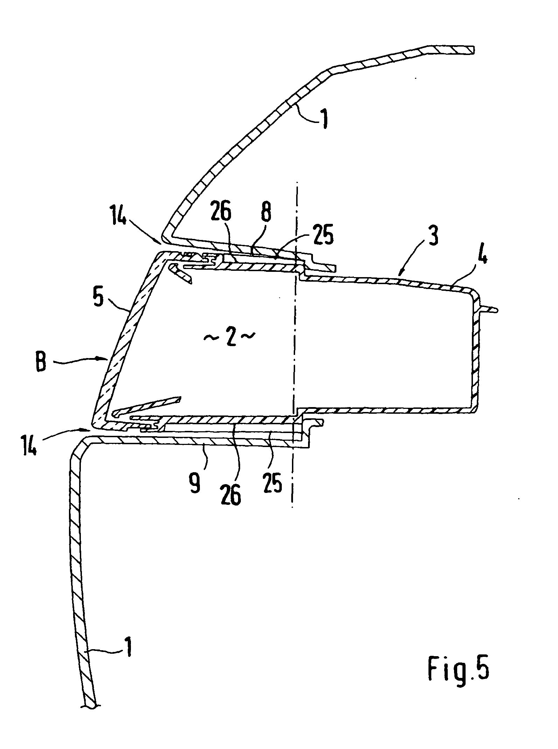

- Fig. 5: einen Schnitt nach der Linie V-V der Fig. 1 in größerer Darstellung,

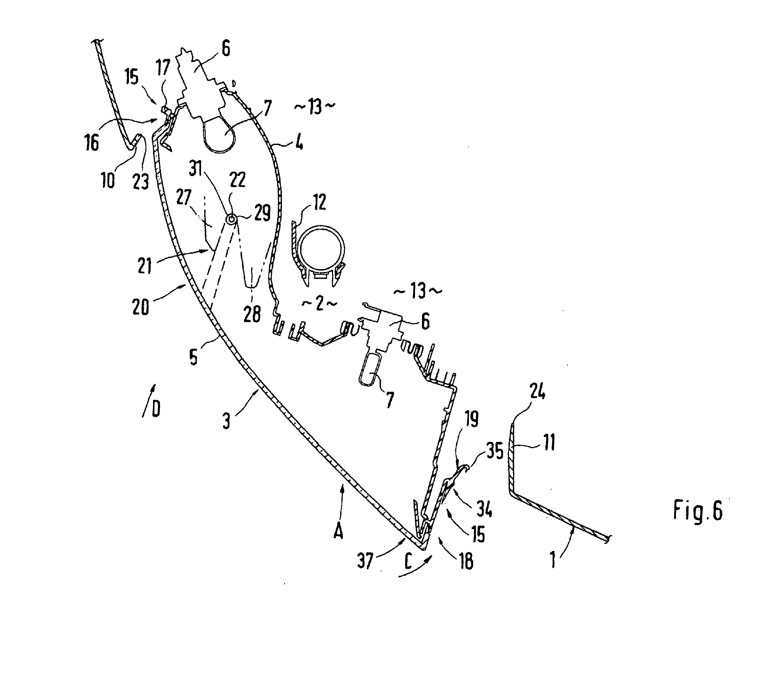

- Fig. 6: einen Schnitt nach der Linie VI-VI der Fig. 1, wobei das Bauteil sich in seiner Einführstellung befindet,
- Fig. 7: einen Schnitt entsprechend Fig. 6, jedoch in Betriebsstellung des Bauteils,
- Fig. 8: eine Einzelheit X der Fig. 4 in größerer Darstellung,
- Fig. 9: eine Einzelheit Y der Fig. 4 in größerer Darstellung.

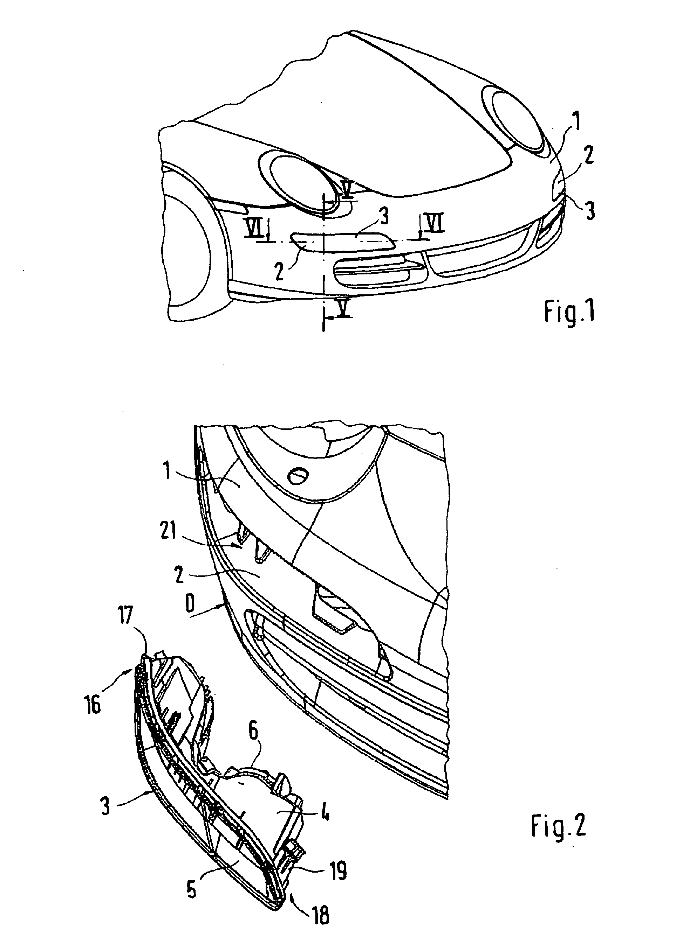

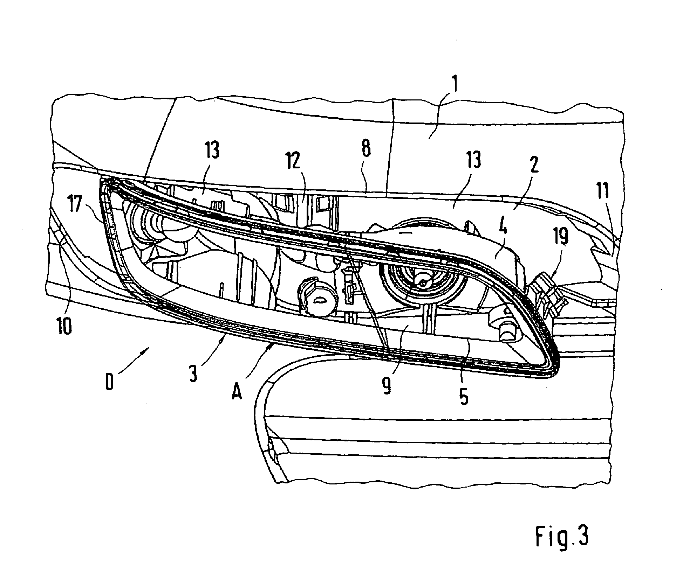

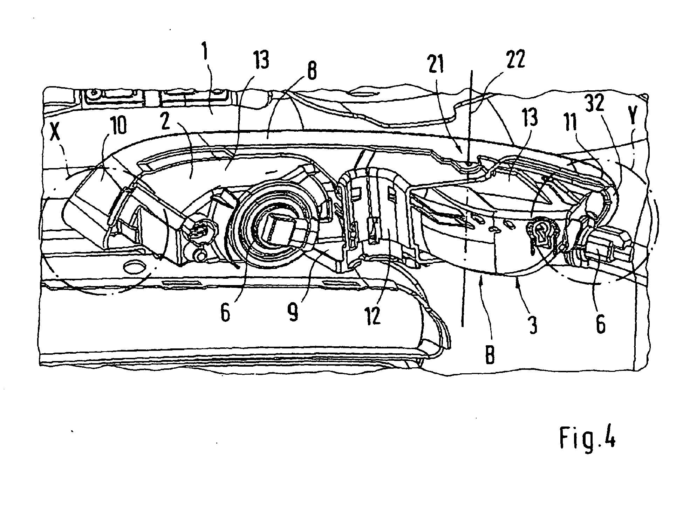

In den Fig. 1 bis 4 ist ein Karosserieteil 1 gezeigt, das zumindest eine Mulde 2 zur Aufnahme eines Bauteils 3 aufweist. Im Ausführungsbeispiel wird das Karosserieteil 1 durch ein aus elastischem Kunststoff gefertigtes Bugendteil eines Kraftfahrzeug gebildet. Das Karosserieteil 1 könnte jedoch auch durch ein Blechteil oder dgl. gebildet werden.

Das Bauteil 3 wird im Ausführungsbeispiel durch eine langgestreckte in Fahrzeugquerrichtung verlaufende etwa horizontal ausgerichtete Zusatzleuchte gebildet, die einen Blinker und/oder eine Positionsleuchte und/oder eine Nebelleuchte oder dgl. enthält. Zumindest ein Teilbereich des Bauteils 3 könnte beispielsweise auch durch ein Lufteinlassteil, eine Blende oder dgl. gebildet werden.
Das Bauteil 3 besteht im Wesentlichen aus einem Gehäuse 4, das an seiner Vorderseite durch eine durchsichtige Scheibe 5 aus Glas oder Kunststoff geschlossen ist und das an seiner Rückseite Lampenfassungen 6 aufweist, in die Glühlampen 7 einsetzbar sind.

Die Mulde 2 ist im Ausführungsbeispiel einstückig mit dem Karosserieteil 1 ausgebildet und umfasst einen oberen Wandabschnitt 8, einen unteren Wandabschnitt 9, zwei gegenüberliegend angeordnete Seitenwandabschnitte 10, 11 und einen hinteren aufrecht verlaufenden Wandabschnitt 12. Im Ausführungsbeispiel sind der obere Wandabschnitt 8 und der untere Wandabschnitt 9 etwa horizontal ausgebildet. Der hintere in der Draufsicht gesehen bogenförmig verlaufende Wandabschnitt 12 erstreckt sich lediglich in einem mittleren Teilbereich der Quererstreckung der Mulde 2 und verbindet den oberen Wandabschnitt 8 mit dem unteren Wandabschnitt 9. Dadurch erfolgt eine Aussteifung der Mulde 2. Zu beiden Seiten des hinteren Wandabschnitts 12 sind großflächige Durchtrittsöffnungen 13 vorgesehen, durch die Teilbereiche des aufgenommenen Bauteils 3 hindurchragen. Durch die Formgebung des hinteren Wandabschnitts 12, der Durchtrittsöffnungen 13 und die korrespondierende Ausbildung des Gehäuses 4 des Bauteils 3 wird das lagerichtige Einführen des Bauteils 3 in die Mulde 2 des Karosserieteils 1 in Fahrzeugquerrichtung unterstützt. Im Ausführungsbeispiel ist die quer verlaufende Mulde 2 etwa horizontal ausgerichtet und die Schwenkachse 22 verläuft rechtwinkelig hierzu. Die Mulde 2 kann selbstverständlich auch aufrecht oder schräg verlaufend ausgerichtet sein.

Das Bauteil 3 wird von der Außenseite des Kraftfahrzeuges her an die Mulde 2 herangeführt und über eine schräg verlaufende Einführstellung A in die Mulde 2 eingesetzt. Zur lagerichtigen Positionierung des Bauteils 3 in Höhenrichtung sind am Bauteil 3 und zwar an der Oberseite und an der Unterseite des Gehäuses 4 örtlich vorstehende Rippen ausgebildet, die sich mit ihren freien Enden an korrespondierenden ebenfalls vorstehenden Auflageflächen der Mulde 2 abstützen (nicht näher dargestellt). Dadurch wird beim Einsetzen des Bauteils 3 umlaufend ein gleichmäßiger Fugenverlauf 14 zwischen Mulde 2 und Bauteil 3 erzielt.

Die Befestigungsvorrichtung 15 für das in der Mulde 2 aufgenommene Bauteil 3 besteht aus einem an einem seitlichen Randbereich 16 des Bauteils 3 angeformten Halteteil 17, das in der Betriebsstellung B des Bauteiles 3 mit einem ersten Seitenwandabschnitt 10 der Mulde 2 in Wirkverbindung steht. Ferner umfasst die Befestigungsvorrichtung 15 ein an einem gegenüberliegenden seitlichen Randbereich 18 des Bauteiles 3 angeordnetes federndes Rastteil 19, das in der Betriebsstellung B mit einem zweiten Seitenwandabschnitt 11 der Mulde 2 zusammenwirkt.

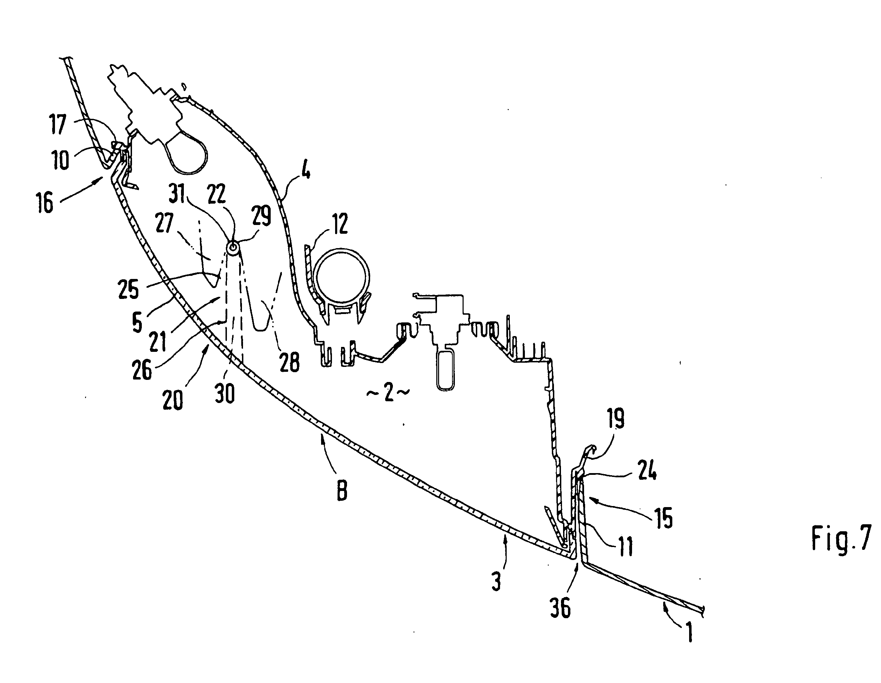

Erfindungsgemäß ist zwischen der Mulde 2 und dem angrenzenden Bauteil 3 in einem oberen und/oder unteren Bereich 20 jeweils eine Einrichtung 21 zwischengeschaltet, die ein lagerichtiges Einführen des aufzunehmenden Bauteils 3 in die Mulde 2 und ein definiertes Verschwenken des Bauteils 3 um eine aufrechte Schwenkachse 22 in die Betriebsstellung B bewerkstelligt. Beim Verschwenken des Bauteils 3 in Pfeilrichtung C um die Schwenkachse 22 hintergreift das angeformte Halteteil 17 einen freien Randbereich 23 des ersten Seitenwandabschnitts 10, wogegen das federnde Rastteil 19 mit einem freien Randbereich 24 des zweiten Seitenwandabschnitts 11 verrastend zusammenwirkt (Fig. 7).

Jede Einrichtung 21 setzt sich aus einer in Einschubrichtung D des Bauteils 3 hin offenen Aufnahme 25 und einem mit der Aufnahme 25 zusammenwirkenden Führungselement 26 zusammen. Im Ausführungsbeispiel sind die Aufnahmen 25 dem Karosserieteil 1 und die Führungselemente 26 dem Bauteil 3 zugeordnet. Selbstverständlich könnte auch eine kinematische Umkehr dieses Prinzips vorgesehen sein.

Die Aufnahmen 25 sind vorzugsweise einstückig mit dem Karosserieteil 1 ausgebildet. Sie könnten jedoch auch durch separate Teile gebildet werden, die nachträglich mit dem Karosserieteil 1 verbunden sind.

Die Führungselemente 26 sind vorzugsweise einstückig mit dem aufzunehmenden Bauteil 3 ausgebildet. Das Halteteil 17 und das federnde Rastteil 19 sind ebenfalls einstückig mit dem aufzunehmenden Bauteil 3 ausgebildet und werden durch angeformte Abschnitte des Gehäuses 4 gebildet. Die vorzugsweise am oberen Wandabschnitt 8 und am unteren Wandabschnitt 9 ausgebildeten Aufnahmen 25 sind in der Draufsicht gesehen jeweils etwa V-förmig ausgebildet, wobei die beiden seitlichen Schenkel 27, 28 jeder Aufnahme 25 über einen hinteren radienförmigen Übergangsbereich 29 miteinander verbunden sind. Durch die V-förmige Ausgestaltung der Aufnahme 25 wird das Einführen des Bauteils 3 in die Mulde 2 wesentlich erleichtert und erfolgt zwangsweise.

Die am Gehäuse 4 des Bauteils 3 ausgebildeten nach unten bzw. oben hin vorstehenden Führungselemente 26 werden durch zylindrische Drehzapfen (nicht näher dargestellt) oder durch langgestreckte rippenartige Anformungen 30 gebildet, die an ihren den Aufnahmen 25 zugekehrten Enden in der Draufsicht gesehen halbkreisförmig oder kreisförmig ausgebildet sind. Bei der Montage des Bauteils 3 wird dieses soweit in die Mulde 2 eingeschoben, bis die halbkreisförmigen oder kreisförmigen Enden 31 oder die zylindrischen Drehzapfen am radienförmigen Übergangsbereich 29 der Aufnahmen 25 anliegen. Die in Höhenrichtung gesehen übereinander liegenden Mittelpunkte der zylindrischen Drehzapfen bzw. der halbkreisförmigen Enden der Führungselemente 26 sowie der Aufnahmen 25 definieren die Schwenkachse 22 des Bauteils 3.

In der Draufsicht gesehen verläuft die Schwenkachse 22 des Bauteils 3 mit Abstand zu beiden Seitenwandabschnitten 10, 11 der Mulde 2 und zwar benachbart dem hinteren aufrechten Wandabschnitt 12 der Mulde 2.

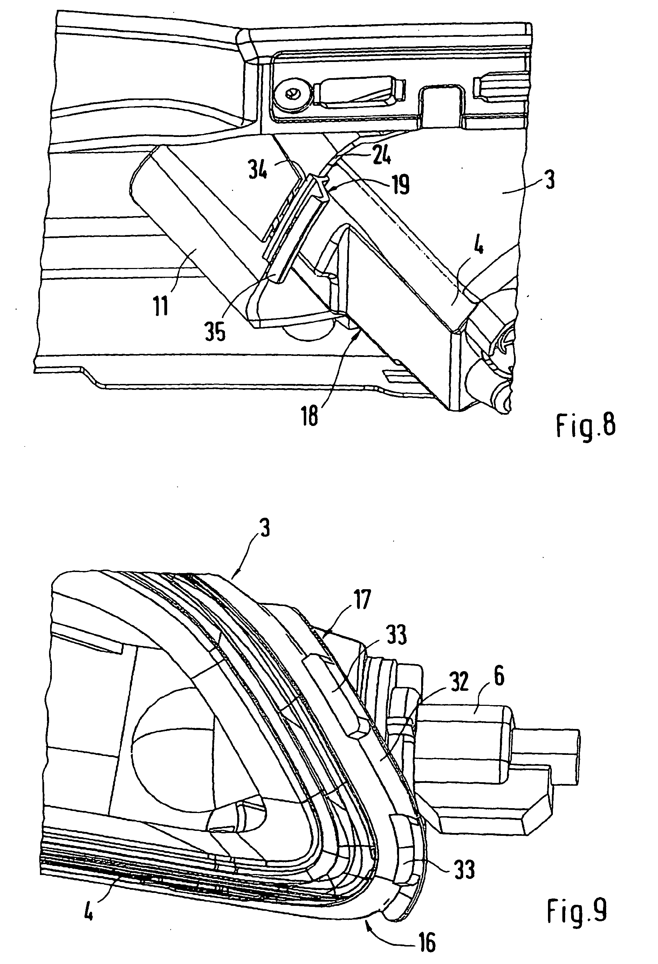

Das Halteteil 17 wird durch einen angespritzten, lang gestreckten schmalen Flansch 32 gebildet, der dem räumlichen Formverlauf des angrenzenden bogenförmigen Seitenwandabschnitts 10 angepasst ist. Das Halteteil 17 kann über seine gesamte Längserstreckung oder nur bereichsweise an erhaben ausgebildeten Auflageabschnitten 33 am stirnseitigen Wandbereich 23 des Seitenwandabschnitts 10 anliegen (Fig. 9). Das federnde Rastteil 19 umfasst im Ausführungsbeispiel zwei in Einschubrichtung D aneinander gesetzte Rasthaken 34, 35. In der Betriebsstellung B des Bauteils 3 hintergreift der weiter vorne liegende Rasthaken 34 den Randbereich 24 des Seitenwandabschnitts 11 der Mulde 2 (Fig. 7).

Der in Einschubrichtung D weiter hinten liegende Rasthaken 35 stellt eine zusätzliche Sicherung gegen ungewolltes Herausfallen des Bauteils 3 dar, wenn die Rastverbindung zwischen Rasthaken 34 und dem Randbereich 24 gelöst wurde. Die Rastverbindung lässt sich ohne Zusatzwerkzeuge mittels einer Kreditkarte oder ähnlichem lösen, die in den Spalt 36 zwischen Bauteil 3 und Mulde 2 im Bereich des Rastteils 19 von außen her einführbar ist.

Die Montage des Bauteils 3 erfolgt dergestalt. Das Bauteil 3 wird unter leichter Schrägstellung von vorne her an die Mulde 2 des Karosserieteils 1 herangeführt. Durch die Kontur des hinteren Wandabschnitts 12 der Mulde 2, die beiden seitlich daran anschließenden Durchtrittsöffnungen 13 und das korrespondierend ausgebildete Gehäuse 4 des aufzunehmenden Bauteils 3 wird das lagerichtige Einsetzen des Bauteils 3 in Querrichtung definiert.

Gleichzeitig greifen die Führungselemente 26 des Bauteils 3 in die nach vorne hin offenen V-förmigen Aufnahmen 25 der Mulde 2 ein. Das Bauteil 3 wird solange in Einschubrichtung D bewegt, bis die Drehzapfen oder die kreisbogenförmigen Enden 31 der Führungselemente 26 am Grund der Aufnahme 25 anliegen. Danach erfolgt durch kurzen Druck auf das innere Ende 37 des Bauteils 3 ein Verschwenken um die aufrechte Schwenkachse 22 der Einrichtung 21. Gleichzeitig mit dem Verschwenken erfolgt eine Verrastung des Bauteils 3 an beiden seitlichen Endbereichen.

Eine Demontage des Bauteils 3 erfolgt durch zweimaliges Einstecken einer Kreditkarte oder ähnlichem in den Spalt 36 zwischen dem Bauteil 3 und der Mulde 2 und zwar im Bereich des Rastteiles 19. Danach kann das Bauteil 3 aus der Mulde 2 entnommen werden. Beim ersten Einstecken der Kreditkarte wird die Verbindung zwischen dem vorderen Rasthaken 34 und dem Randbereich 24 des Seitenwandabschnitts 11 gelöst und das Bauteil 3 springt geringfügig nach außen vor, wird jedoch durch den zweiten Rasthaken 35 gegen Herausfallen gesichert.

## Patentansprüche

1. Befestigungsvorrichtung für ein in einer Mulde (2) eines Karosserieteiles (1) aufgenommenes Bauteil (3), das von der Außenseite her über eine schräg verlaufende Montagestellung in die Mulde (2) einsetzbar und durch eine Schwenkbewegung in eine Betriebsstellung innerhalb der Mulde (2) verlagerbar ist, wobei die Mulde (2) zwei Seiten wandabschnitte (10, 11) und zwei mit Abstand zueinander angeordnete Wandabschnitte (8, 9) aufweist und wobei in der Betriebsstellung ein an einem ersten Randbereich des Bauteiles (3) angeformtes Halteteil (17) mit einem ersten Seitenwandabschnitt (10) der Mulde (2) in Wirkverbindung steht und an einem gegenüberliegenden zweiten Randbereich des Bauteiles (3) ein federndes Rastteil (19) vorgesehen ist, das mit einem zweiten Seitenwandabschnitt (11) der Mulde (2) zusammenwirkt (2) **dadurch gekennzeichnet, dass** zwischen der Mulde (2) und dem angrenzenden Bauteil (3) im Bereich beider Wandabschnitte (8, 9) jeweils eine Einrichtung (21) zwischengeschaltet ist, die ein lagerichtiges Einführen des aufzunehmenden Bauteils (3) in die Mulde (2) und ein definiertes Verschwenken des Bauteils (3) um eine etwa rechtwinkelig zu den Wandabschnitten (8, 9) verlaufende Schwenkachse (22) in die Betriebsstellung (B) bewerkstelligt, wobei beim Verschwenken des Bauteils (3) das angeformte Halteteil (17) einen freien Randbereich (23) des ersten Seitenwandabschnitts (10) hintergreift, wogegen das federnde Rastteil (19) mit einem freien Randbereich (24) des zweiten Seitenwandabschnitts (11) verrastend zusammenwirkt.

2. Befestigungsvorrichtung nach Anspruch 1, **dadurch gekennzeichnet, dass** sich jede Einrichtung (21) aus einer in Einschubrichtung (D) des Bauteils (3) hin offenen Aufnahme (25) und einem mit der Aufnahme (25) zusammenwirkenden Führungselement (26) zusammensetzt.

3. Befestigungsvorrichtung nach Anspruch 2, **dadurch gekennzeichnet, dass** die Aufnahmen (25) dem Karosserieteil (1) und die Führungselemente (26) dem Bauteil (3) zugeordnet sind oder umgekehrt.

4. Befestigungsvorrichtung nach Anspruch 2 oder 3, **dadurch gekennzeichnet, dass** die Aufnahmen (25) einstückig mit dem Karosserieteil (1) ausgebildet sind.

5. Befestigungsvorrichtung nach den Ansprüchen 2 oder 3, **dadurch gekennzeichnet, dass** die Führungselemente (26) einstückig mit dem aufzunehmenden Bauteil (3) ausgebildet sind.

6. Befestigungsvorrichtung nach Anspruch 1, **dadurch gekennzeichnet, dass** das zumindest eine Halteteil (17) und das federnde Rastteil (19) ebenfalls einstückig mit dem aufzunehmenden Bauteil (3) ausgebildet sind.

7. Befestigungsvorrichtung nach Anspruch 2, **dadurch gekennzeichnet, dass** die obere und/oder untere Aufnahme (25) in der Draufsicht gesehen jeweils etwa V-förmig ausgebildet sind, wobei die beiden Schenkel (27, 28) jeder Aufnahme (25) über einen hinteren radienförmigen Übergangsbereich (29) miteinander verbunden sind.

8. Befestigungselement nach Anspruch 2, **dadurch gekennzeichnet, dass** die vorstehenden Führungselemente (26) durch zylindrische Drehzapfen oder durch langgestreckte rippenartige Anformungen (30) gebildet werden, die an ihren den Aufnahmen (25) zugekehrten Enden (31) in der Draufsicht gesehen halbkreisförmig ausgebildet sind.

9. Befestigungsvorrichtung nach einem der vorangegangenen Ansprüche, **dadurch gekennzeichnet, dass** das Halteteil (17) durch einen langgestreckten Flansch (32) gebildet ist, der dem räumlichen Formverlauf des angrenzenden Seitenwandabschnittes (11) angepasst ist.

10. Befestigungsvorrichtung nach einem der vorangegangenen Ansprüche, **dadurch gekennzeichnet, dass** das federnde Rastteil (19) zwei in Einschubrichtung (D) aneinander gesetzte Rasthaken (34, 35) umfasst, wobei der in Einschubrichtung (D) vordere Rasthaken (34) die Betriebsstellung (B) des Bauteils (3) definiert, wogegen der in Einschubrichtung (D) hintere Rasthaken (35) eine Sicherung gegen ungewolltes Herausfallen des Bauteils (3) darstellt.

11. Befestigungsvorrichtung nach einem der vorangegangenen Ansprüche, **dadurch gekennzeichnet, dass** zur lagerichtigen Positionierung des Bauteils (3) in Höhenrichtung am Bauteil (3) örtlich vorstehende Rippen und an der Mulde (2) örtlich korrespondierende Auflageflächen ausgebildet sind, wobei sich die Rippen mit ihren freien Enden an den Auflageflächen abstützen.

12. Befestigungsvorrichtung nach einem der vorangegangenen Ansprüche **dadurch gekennzeichnet, dass** die Schwenkachse (22) des Bauteils (3) in der Draufsicht gesehen mit Abstand zu den beiden Seitenwandabschnitten (10, 11) der Mulde (2) verläuft.

## Claims

1. A fastening device for a component (3) which is held in a recess (2) in a body part (1), which component (3) is insertable into the recess (2) from outside in an obliquely extending installation position and is displaceable into an operating position within the recess (2) by means of a pivoting movement, wherein the recess (2) has two side-wall portions (10, 11) and two spaced wall portions (8, 9) and wherein, in the operating position, a holding part (17) moulded onto a first edge region of the component (3) is operatively connected to a first side-wall portion (10) of the recess (2), and a resilient locking part (19) is provided on an opposing, second edge region of the component (3) and co-operates with a second side-wall portion (11) of the recess (2), **characterised in that** a respective arrangement (21) is interposed between the recess (2) and the adjacent component (3) in the region of both wall portions (8, 9), which arrangement (21) allows the component (3), which is to be held in the recess, to be inserted into the recess (2) in the correct position and allows the component (3) to be pivoted into the operating position (B) in a defined manner about a pivoting axis (22) extending approximately at right angles to the wall portions (8, 9), wherein, during the pivoting movement of the component (3), the moulded-on holding part (17) engages behind a free edge region (23) of the first side-wall portion (10), while the resilient locking part (19) co-operates in a locking manner with a free edge region (24) of the second side-wall portion (11).

2. A fastening device according to claim 1, **characterised in that** each arrangement (21) is assembled from a receiver (25), which is open in the insertion direction (D) of the component (3), and a guide member (26) co-operating with the receiver (25).

3. A fastening device according to claim 2, **characterised in that** the receivers (25) are associated with the body part (1) and the guide members (26) are associated with the component (3) or vice versa.

4. A fastening device according to claim 2 or 3, **characterised in that** the receivers (25) are formed in one piece with the body part (1).

5. A fastening device according to claim 2 or claim 3, **characterised in that** the guide members (26) are formed in one piece with the component (3) to be held in the recess.

6. A fastening device according to claim 1, **characterised in that** the at least one holding part (17) and the resilient locking part (19) are also formed in one piece with the component (3) to be held in the recess.

7. A fastening device according to claim 2, **characterised in that** the upper and/or lower receiver (25) are each approximately V-shaped when seen in plan view, wherein the two arms (27, 28) of each receiver (25) are connected to one another via a rear, radius-type transition region (29).

8. A fastening device according to claim 2, **characterised in that** the projecting guide members (26) are formed by cylindrical pivot pins or by elongate, rib-type formations (30) which, at their ends (31) facing the receivers (25), are formed in a semi-circular manner when seen in plan view.

9. A fastening device according to any one of the preceding claims, **characterised in that** the holding part (17) is formed by an elongate flange (32) which is adapted to the spatial extent of the adjacent side-wall portion (11).

10. A fastening device according to any one of the preceding claims, **characterised in that** the resilient locking part (19) comprises two locking hooks (34, 35) which adjoin one another in the insertion direction (D), wherein the front locking hook (34) in the insertion direction (D) defines the operating position (B) of the component (3), while the rear locking hook (35) in the insertion direction (D) guards against the component (3) falling out unintentionally.

11. A fastening device according to any one of the preceding claims, **characterised in that**, for the correct positioning of the component (3) in the vertical direction, locally projecting ribs are formed on the component (3) and locally corresponding bearing surfaces are formed on the recess (2), wherein the free ends of the ribs are supported against the bearing surfaces.

12. A fastening device according to any one of the preceding claims, **characterised in that** the pivoting axis (22) of the component (3) extends with spacing from the two side-wall portions (10, 11) of the recess (2) when seen in plan view.

## Revendications

1. Dispositif de fixation pour un module (3) logé dans une cavité (2) d'une pièce de carrosserie (1), lequel peut être introduit dans la cavité (2) depuis l'extérieur dans une position de montage en biais et peut être déplacé dans une position de service à l'intérieur de la cavité (2) par un mouvement de pivotement, la cavité (2) comportant deux parois latérales (10, 11) et deux parois (8, 9) situées à distance l'une de l'autre, et un élément de fixation (17) formé contre un premier bord du module (3) entrant, dans la position de service, en liaison active avec une première paroi latérale (10) de la cavité (2), et un élément de blocage (19) flexible étant prévu sur un deuxième bord opposé du module (3) et coopérant avec une deuxième paroi latérale (11) de la cavité (2), **caractérisé en ce que**, entre la cavité (2) et le module (3) adjacent dans la zone des deux parois (8, 9) est intercalé respectivement un dispositif (21), qui permet une introduction en position correcte du module (3) à insérer dans la cavité (2) et un pivotement défini du module (3) autour d'un axe de pivotement (22), orienté perpendiculairement aux parois (8, 9), vers la position de service (B), l'élément de fixation (17) s'engageant lors du pivotement du module (3) derrière un bord libre (23) de la première paroi latérale (10), alors que l'élément de blocage (19) coopère dans le sens d'un blocage avec un bord libre (24) de la deuxième paroi latérale (11).

2. Dispositif de fixation selon la revendication 1, **caractérisé en ce que** chaque dispositif (21) est formé par un logement (25) ouvert dans la direction d'introduction (D) du module (3) et par un élément de guidage (26) coopérant avec le logement (25).

3. Dispositif de fixation selon la revendication 2, **caractérisé en ce que** les logements (25) sont associés à la partie de carrosserie (1) et les éléments de guidage (26) sont associés au module (3) ou inversement.

4. Dispositif de fixation selon la revendication 2 ou 3, **caractérisé en ce que** les logements (25) sont réalisés d'un seul tenant avec la pièce de carrosserie (1).

5. Dispositif de fixation selon la revendication 2 ou 3, **caractérisé en ce que** les éléments de guidage (26) sont réalisés d'un seul tenant avec le module (3) à insérer.

6. Dispositif de fixation selon la revendication 1, **caractérisé en ce que** ledit au moins un élément de fixation (17) et l'élément de blocage (19) flexible sont également réalisés d'un seul tenant avec le module (3) à insérer.

7. Dispositif de fixation selon la revendication 2, **caractérisé en ce que** les logements (25) supérieurs et/ou inférieurs sont réalisés chacun sensiblement en forme de V par référence à une vue en élévation, les deux branches latérales (27, 28) de chaque logement (25) étant assemblées l'une à l'autre par l'intermédiaire d'une zone de transition (29) arrière en forme de rayon.

8. Dispositif de fixation selon la revendication 2, **caractérisé en ce que** les éléments de guidage (26) en saillie sont formés par des tourillons cylindriques ou par des profilages (30) en forme de nervures allongées qui, sur leurs extrémités (31) orientées vers les logements (25), sont réalisées avec une forme semi-sphérique par référence à une vue en élévation.

9. Dispositif de fixation selon l'une quelconque des revendications précédentes, **caractérisé en ce que** l'élément de fixation (17) est formé par une bride (32) allongée, qui est adaptée au tracé de la forme tridimensionnelle de la paroi latérale (11) adjacente.

10. Dispositif de fixation selon l'une quelconque des revendications précédentes, **caractérisé en ce que** l'élément de blocage (19) flexible comporte deux crochets (34, 35) juxtaposés dans la direction d'introduction (D), le crochet 34 avant, par référence à la direction d'introduction (D), définissant la position de service (B) du module (3), alors que le crochet (35) arrière, par référence à la direction d'introduction (D), constitue une sécurité contre la perte accidentelle du module (3).

11. Dispositif de fixation selon l'une quelconque des revendications précédentes, **caractérisé en ce que**, pour positionner correctement le module (3) dans le sens vertical, des nervures sont réalisées localement en saillie sur le module (3) et des surfaces d'appui correspondantes sont réalisées localement sur la cavité (2), les nervures prenant appui avec leurs extrémités libres sur les surfaces d'appui.

12. Dispositif de fixation selon l'une quelconque des revendications précédentes, **caractérisé en ce que** l'axe de pivotement (22) du module (3) s'étend, par référence à une vue en élévation, à distance des deux parois latérales (10, 11) de la cavité (2).
